# EUROPEAN PATENT SPECIFICATION

(11) **EP 2 996 989 B1**
(45) Date of publication and mention of the grant of the patent: **24.10.2018**
(21) Application number: 13747552.1
(22) Date of filing: 24.07.2013
(51) Int. Cl.: C02F 1/44, B01D 61/02, C02F 103/08

(54) **LARGE VOLUME SUB-SEA WATER DESALINATION REVERSE OSMOSIS SYSTEM, METHOD, AND APPARATUS**
GROSSVOLUMIGES UNTERWASSERENTSALZUNGSUMKEHROSMOSESYSTEM, VERFAHREN UND VORRICHTUNG
SYSTÈME, PROCÉDÉ ET APPAREIL À OSMOSE INVERSE POUR LE DESSALEMENT À GRAND VOLUME D'EAU SOUS-MARINE

(30) Priority: 15.05.2013 US 201313894804
(43) Date of publication of application: 23.03.2016
(73) Proprietor: Sanko Tekstil Isletmeleri Sanayi ve Ticaret A.S., 16400 Inegöl Bursa (TR); Zeren, Fevzi, New Providence, NJ 07874 (US); Konukoglu, Zekeriye, 16400 Inegol (TR)
(72) Inventor: ZEREN, Fevzi, New Providence, NJ 07874 (US); KONUKOGLU, Zekeriye, 16400 Inegöl Bursa (TR)
(74) Representative: Finnegan Europe LLP
(86) International application number: PCT/US2013/051856
(87) International publication number: WO 2014/185936

(56) References cited:
- EP-A2- 0 968 755
- WO-A1-94/12267
- WO-A1-2012/025656
- WO-A2-2012/131621
- CN-B- 101 200 319
- DE-A1- 10 211 788
- KR-A- 20020 072 315
- US-A- 3 456 802
- US-A1- 2008 190 849

## Description

### Filed of the invention

This invention relates to reverse osmosis desalination systems. Specifically, this invention concerns large capacity deep-sea underwater reverse osmosis desalination methods and apparatuses.

### Background of the Invention

Producing drinkable water from a saline water, such as seawater, is not a new concept. Previously, salty seawater was boiled and collected water vapor was condensed to produce potable water for purposes such as human consumption and irrigation. Desalination is a process involving the removal of salts and other minerals. A brief description of desalination will be discussed here.

At present, two main approaches to the desalination of sea water are thermal and reverse osmosis ("RO") methods. The oldest method is thermal dissalination, wherein salty sea water is vaporized by thermal energy input. The energy source can be, for example, fossil fuels, biofuels, or renewable energy sources including solar, wind, or excess heat from a power plant, as long as sufficient heat is generated to vaporize the sea water.

The thermal desalination process is an extremely high-energy consuming process. For instance, the amount of energy needed to vaporize 1 ton (i.e., approximately 1 m³) of water is about 2.83 MJ/kg (714 KW-hr/ton) (assuming normal atmospheric conditions of 100 kPa (1 bar), 25° C initial temperature, specific heat = c = 1Kcal/kg-C°, and the heat of vaporization= H_{fg}= 540 Kcal/kg).2570 MJ/ m³ (714 Kw-hr/m³) energy to vaporize 1 m³ water is enough energy for almost 100 households' electricity needs over one hour. However, with recent advancements, such as vacuum boiling, the boiling temperature is reduced, allowing for the use of low-temperature heat sources. Nevertheless, the thermal-distillation method of sea water desalination process is a very high energy-consuming process. For this reason, the thermal desalination method is being used by those fossil-fuel-rich states, such as countries in the Middle East A common alternative to the thermal desalination method is the RO method.

RO desalination of sea water is a separation process of dissolved salt from water. The process uses pump(s) to force pressurized water to flow through a semi-permeable membrane that allows the pure water (or any solvent) to pass through, while keeping salt (or any solute concentration) on the other side. This separation can happen if the minimum pressure differential across the membrane, which may also be referred to as osmosic pressure, exists. RO is akin to a water filtration process, and may be used for many different concentrated solutions, including sugar solutions, and not just for sea water desalination purposes. An early application using a semi-permeable membrane was by the French physicist Jean Nollet in 1748. In 1901, German scientist van 't Hoff scientifically described the osmosis process and won the first chemistry Nobel prize for his work. He utilized the ideal gas law of equation of state, and formulated the minimum osmotic pressure that was necessary for an RO process to initiate. Also, Uri Lachish, an Israeli scientist, has provided a comprehensive treatment of osmosis, RO, and the osmotic pressure. Lachish's work made a significant contribution to RO sea water desalination plants operating around the world today. A simplified form of osmotic pressure (originally derived by van 't Hoff and simplified by Lachish) is π = *cRT.* In this equation, for sea water, π is the osmotic pressure (bar), c is the molar concentration of the solute (salt, NaCl), R is the universal gas constant (0.082 liter-bar/K-mol), and T is temperature (K).

While 70% of the earth's surface is covered with water, only about 3% of the total water is fresh. The remainder of the water is too saline and ocean-based, and may not be usable in its natural state for human consumption and/or irrigation purposes. According to the United Nations, water use by humans increased more than twice the population growth in the last century. More than 1 billion people live in regions where water is scarce, and this number could reach 1.8 billion by the year 2025. The magnitude of this problem was well expressed, nearly 50 years ago, when President John F. Kennedy noted, "[i]f we could ever competitively, at a cheap rate, get fresh water from salt water... [this] would be in the long-range interests of humanity which would really dwarf any other scientific accomplishments."

The world's oceans present a virtually limitless potential water supply, under any circumstances, including droughts. Use of the world's oceans as a water supply can be possible if low-cost sea water desalination conversion and operation technology exists and is practicable. Otherwise, the water problem may continue despite the existence of the monumental potential source that is the world's oceans. As discussed herein, despite recent advancements, the thermal distillation approach may be more useful in oil-rich nations where fossil fuels are cheap and water for human consumption and irrigation use is scarce. There are more than 14,000 desalination plants operating around world today. All together, these plants produced approximately 68 million m³ of fresh water per day in 2010, and this number is expected to reach 140 m³ of fresh water per day by the year 2020. More than half of the capacity is in the Middle East.

RO desalination of sea water is a serious contender to thermal distillation. RO desalination has been widely used over the last 20 years because the process requires less energy to produce the same amount of fresh water. Although energy consumption per unit volume of fresh water production may be lower, it is not too low and is more affordable enough to be considered as an ultimate solution to the desalination of sea water.

The cost of a desalination plant is dependent upon many factors, including but not limited to the location (distance) from the sea, the cost of disposing of saline concentrate, the length of the piping system, capacity, feed water concentrate, cost of energy, and labor. Therefore, the cost can vary from region to region around the world, such that for the same output of fresh water, a cost comparison may not be appropriate. In order to provide a scientific comparison to establish a bench mark number, the required energy to produce a unit volume of fresh water from sea water may be considered. The RO process is not restricted to seawater desalination only, as RO can be used beyond desalination, including waste water treatment, sugar solution refinement, and energy production. However, the present invention includes RO desalination of the sea or deep-lake brackish water. Therefore, the technical discussions described herein concern the desalination process for the production of potable or irrigation water from a large body of water, such as a deep sea or lake.

RO desalination involves the removal of dissolved inorganic solids (i.e., salt-solute) and other minerals from saline water, such as seawater. This may be accomplished by pumping saline feed water at high pressure(s) in excess of the osmotic pressure over a semi-permeable membrane, which may block the solute while allowing fresh water to pass through. There are many commercially available RO filters having many different sizes, ranging from 20.32 to 38.1+ cm (8 to 15+ inches) in diameter. The filter may be composed of thin membrane materials, such as cellulose acetate, cellulose triacetate, thin film, or a blend of synthetic polyamide fibers, space mesh-feed channel, or outer polysulfone. These materials may be combined as a spiral-wound or sandwich envelope around a centralized perforated tube, which may be referred to as a permeate-fresh water tube, for maximizing surface contact areas with incoming saline water. RO filter designs may vary from manufacturer to manufacturer; however, each filter typically includes semi-permeable membrane materials to block inorganic dissolved solids, including salt.

As described herein, the pressure differential across the semi-permeable membrane, between an incoming saline feed side or a high concentration side and a collected fresh water-permeate side, should generally exceed the osmotic pressure of the salty or briny water in order for the RO process to start. However, considering process pressures (i.e., saline feed pressures) of existing RO desalination plants operating around the world, they can be significantly higher than the osmotic pressures of the incoming saline feed water. In some cases, the applied process pressures are, on average, 4 to 6 times higher than theoretically necessary osmotic pressures. It may also be true that these higher process pressures do not produce proportionally higher freshwater outputs. Presently, for desalination of seawater, the pressure can reach as much as 8+ MPa (80+ bar), while lesser amounts may be required for brackish water, because of thermodynamic irreversibility taking place during the desalination process. Forcing incoming seawater over the semi-permeable membrane, to maximize the fresh water output at a desired rate, will not likely work. That is, under real-world conditions, it may be impossible to achieve 100% conversion of available energy (or energy potential), especially by blocking salt ions, which are already in an equilibrium state with water.

In any given thermodynamic process, including pumped flows, the entropy is increased due to irreversibility. In a flow process, the portion of the remaining energy that cannot be converted into what is desired (e.g., the specific energy required to produce one cubic meter of fresh water), may be utilized at a later stage of the process to produce another useful form of energy, rather than being wasted. This may occur when an energy recovery system is installed at an RO plant, in which the high pressure saline concentrate flow after being filtered by a semi-permeable membrane turns one or more water turbines to generate extra energy. However, at each flow process, the flow may not be reversible in a real- world application.

Existing seawater RO desalination plants in operation around the world often use significantly higher processing pressures than the required osmotic pressures. The higher processing pressures eventually result in higher unit energy consumptions and a higher operating cost, in addition to higher initial capital expenditures. As a result, seawater RO desalination may be out of reach for nations that need it most, because of the high cost of energy to run the plant.

Some examples of known plants for desalination of seawater by means of reverse osmosis are WO 2012/131621, EP 0 968 755, CN 101 200 319 or WO 94/12267.

in the invention presented here, higher-saline water pumping pressures can be eliminated. This invention relates to sub-sea-located RO desalination systems and methods. The necessary osmotic pressure(s) can be provided by the static pressure of the water (i.e., the deep sea, lake, or ocean) itself. In the present invention, the membrane system is exposed to a generally uniform pressure field, which differs from the process of forcing saline water (an irreversible process) over the membrane assembly, as is done at conventional land-based plants. The pressure differential(s) across the semi-permeable membrane may be maintained by one or more sub-sea pumps. The pump can pump out accumulated fresh water (permeates) into one or more nearby sub-sea storage tanks. As long as the pressure differential across the semi-permeable membrane is maintained, fresh water generation may continue. The minimum pressure differential across the membrane is equal to or higher than the osmotic pressure of the sea water (or brackish water) at a given location.

In order to provide a better understanding of the present invention, the following discussion of osmotic pressure is provided. Water salinity varies from ocean to ocean ranging from about 30-39 parts per thousand ("ppt"). The average sea water salinity is around 35 ppt (grams of salt per liter). In accordance with the osmotic pressure equation described herein (i.e., van 't Hoff's formula, rr =*cRT)*, pressure is a function of the molar concentration of the dissolved salt (NaCl) in the sea water, as well as the temperature. A simple calculation shows that osmotic pressures for 30 ppt salinity and an average salinity of 35 ppt (assuming 20° C temperature) are 2.46 and 2.877 MPa (24.6 and 28.77 bar), respectively. The amounts of energy corresponding to these pressures for the generation of a cubic meter of fresh water are 2.35 and 2.74 MJ/m³ (0.653 and 0.762 Kw-hr/m³), respectively.

The present invention also includes a method for calculating the osmotic pressure and the specific energy needed to produce 1 m³ of fresh water by the RO desalination method. Also, using the procedure described herein, osmotic parameters, including pressure and energy, can be calculated for oceans/seas and various other brackish waters having different salinities and temperatures.

The method may begin with van 't Hoff's formula (π = *cRT).* The following example is for sea water having a salinity of 35 ppt = 35 g salt-NaCl/liter (1 kg) at 20° C. The molar weight of salt, NaCl = 58.44 g/mole, the molar weight of water, H₂O = 18.05 g/mole, the universal gas constant, R = 0.082 liter-bar/deg.(K)-mol., the number of moles of dissolved salt within 1 liter sea water= 35/58.44 = 0.5989. The dissolved salt may disintegrate into two ions (Na and CI), the molar- ionic concentration of salt within 1 liter (1 kg) of sea water = c = 2 x 0.5989 = 1.197, and osmotic pressure= *π*=*cRT*= 1.197 x 0.082 x 293 = 2.877 MPa (28.77 bar). The specific energy to produce 1 m³ of fresh water, W'/m³ = q x g x h / 3.6 x 10⁶ = 1000 x 9.8 x 280/3.6 x 10⁶ = 2.74 MJ/m³ (0.762 Kw-hr/m³) wherein a depth of 280 m of sea water exerts approximately 2.877 MPa (28.7 bar) pressure.

The objective may be to increase the magnitude of the specific desalination energy, that is, 0.762 Kw-hr/m³ for the world's oceans having an average salinity of 35 ppt. RO desalination plants operating around the world consume as much as ten times more energy to produce the same volume of fresh water. This is true especially for older plants, while new plants having an integrated energy recovery system (high pressure saline solution turbine electric generation) may consume less energy. Presently, even with newer energy recovery systems, the average specific energy may be between 14.4 to 18 MJ/m³ (4 to 5 Kw-hr/m³).

With recent advancements in membrane design technology and the addition of energy recovery systems, the specific energy numbers have begun to increase. However, despite some improvements, land-based sea water desalination RO plant processes are often not a low-cost operation. The specific energy numbers, corresponding to osmotic pressures, discussed herein may not be achieved due to inherent irreversibility involved in the pumping process of the saline water over the membrane equipment.

The present invention involves a novel RO desalination system that operates under water in a deep ocean, sea, brackish lake, body of salt water, or the like, any of which may be referred to herein as a body of "salty water." The present invention can utilize deep water static pressures as a driving force of RO desalination of salty water. Essentially, the conventional land-based RO upstream saline water pumping process can be accomplished by deep water static pressures.

The apparatuses and methods described herein may utilize standard, off-the-shelf RO filtering membrane equipment, possibly with minor modifications (e.g., without an outer wrap or casing). Standard RO membrane equipment may be placed and operated underwater at a depth where the static pressure is equal to or higher than the osmotic pressure of the salty or brackish water at that location. The fresh water (permeate) collected from exit lines of one or more membrane units may be pumped into a large capacity sub-sea storage tank and/or one or more interconnected tanks, which may be made from a flexible, impermeable, and collapsible material, as described in U.S. Patent Application No. 3/802,912, filed on March 14, 2013.

The large capacity storage tank or interconnected tanks may not require an external pumping device to pump water to the sea surface. Because of the flexible membrane-type tank construction material, the bottom static pressure may be sufficient, based on a u-tube manometer principle, to lift the fresh stored water to the sea surface without using any additional pumping device. The sub-sea fresh-water pumping head and the specific energy consumption per unit flow rate (i.e., osmotic pressure and the necessary energy to produce a unit volume of the fresh water) theoretically may be equal to ideal RO desalination parameters, neglecting frictional losses on the discharge side of the pump. As described herein, the osmotic pressure and energy may be about 2.87 MPa (28.7 bar) and 2.74 MJ/m³ (0.762 Kw-hr/m³) for salty water having 35 ppt salinity. Therefore, as long as fresh water is removed or additional pressure head build ups on the permeate side are reduced or eliminated, fresh water production from sea water side to the permeate pipe may continue. That is, using the fresh water pump. pressure differentials generated across the membrane can be equal to or higher than osmotic pressures at that location.

The pushing pressure may be regarded as the most uniform and limitless pressure field of an ocean, as opposed to irreversible pushing forces of a pump used in land-based RO systems. That is, regardless of the membrane equipment design (e.g. more surface area versus less surface area, more versus fewer layers, spiral-wound versus sandwich wrap), fresh water generation may continue. While the amount of time required to generate a given amount of fresh water may be longer for some membrane designs, the membrane design may still generate fresh water without increasing pumping energy consumption, unlike standard land-based RO systems. The pumping pressure for the present invention can be free, limitless, and uniform, thereby providing a near-reversible RO desalination system, regardless of the specific RO membrane design.

One feature of the invention disclosed herein is the use of new methods and apparatuses for large volume RO desalination of sea or brackish water using standard RO membrane technology located at the deep sea floor.

Another feature of the RO desalination systems and methods described herein is an extremely efficient desalination process, which is economical and low-cost compared to existing land-based RO systems.

Yet another feature of the disclosed invention is the capability of producing an extremely large amount of potable and/or irrigation water, while storing such water within sub-sea storage tanks in an economical and safe manner.

Another feature of the disclosed invention is a reduction in marine life damage, compared to land-based RO systems in which salt concentrates must be disposed, usually into surface water. The RO desalination system of the present invention may be disposed at deep waters, such as the deep ocean, which are typically darker, have a limited amount of food to supply fish and other organisms, and therefore may be subject to less, if any, damage.

Still another objective of the sub-sea RO desalination systems and methods described herein is affordability regarding both operational and initial expenses. The present invention can be an extremely affordable desalination system worldwide due to its low energy consumption combined with a large volume, low-cost under water storage system. Therefore, millions of people living near to an ocean or other body of deep brackish water, especially where potable or irrigation water is scarce, may benefit from this invention. These objectives and possibly more may be accomplished as explained herein.

### SUMMARY OF THE INVENTION

The present invention provides a reverse osmosis sub-sea desalination system, comprising:
a reverse osmosis membrane assembly configured to generate fresh water from salty water; a storage tank configured to store fresh water downstream of the reverse osmosis membrane assembly; and
a pump fluidly connected to the reverse osmosis membrane assembly and the storage tank, wherein the reverse osmosis membrane assembly, the storage tank, and the pump are disposed at one or more depths beneath a surface of a body of salty water;
wherein the reverse osmosis membrane assembly comprises: a tracking system including:
   a track disposed on a floor of the body of water; and
   a cable-rope pulley station;
the membrane assembly configured to be moved along the track by a cable connected to the cable-rope pulley station; and
an accumulator configured to accumulate the generated fresh water, wherein the accumulator collects the fresh water from the membrane assembly and then via pump transfers the fresh water to the storage tank, from which the fresh water is pumped upwards to a sea surface station.

The present invention further provides a method of producing fresh water from salty water using the of the present invention, comprising:
generating fresh water from a body of salty water at a location under the surface of the body of salty water by reverse osmosis;
pumping the fresh water to an underwater storage tank; and storing the fresh water in the storage tank, wherein the membrane assembly
generates the fresh water, and wherein the method further comprises selectively moving the membrane assembly along the track disposed on a floor of the body of salty water, by the cable connected to the cable-rope pulley station, and accumulating generated fresh water in the accumulator.

In this invention, a large capacity desalination system located at the bottom or near the bottom of a large body of deep sea or brackish water is presented. This sub-sea system may produce potable and/or irrigation water based on the RO desalination principle. The present invention contemplates the transfer of land-based RO desalination technology, which has been used for years around the world, to a sub-sea location, while integrating new and innovative methods and apparatuses described herein.

The present underwater desalination system may be composed of three subsystems. The subsystems may include one or more RO membrane unit stations, one or more sub-sea fresh water storage tanks, and sub-sea transfer equipment including one or more pumps and associated conduits and process control devices.

An RO membrane unit station may be constructed using either large quantities of the standard, off-the-shelf semi-permeable membrane units, in some instances without an outer protective casing, or one or more large, custom-made semi-permeable membrane devices. Although there may be little to no space restrictions at deep regions of large bodies of water, membrane devices (e.g., standard, cylindrical membrane devices) can be arranged such that flow processes, including the desalination process across membrane layers and the removal of permeate, may be optimized and robust. A circular, spider-like RO membrane assembly, also referred to as an RO station, and/or a rectangular shaped RO station may be provided. In either design, the membrane units can be secured on an RO main stand, and suspended above the sea floor by supporting legs of the RO frame.

RO membrane units without an external casing may be directly exposed to a large body of salty, also referred to as briny, water under high static pressure forces. The fresh water coming from each membrane unit may be collected at larger pipes, which can be connected to an accumulator at the RO station. A sub-sea pump may be used to transfer fresh water from the RO accumulator to one or more nearby sub-sea storage tanks. The driving force of the desalination process may be the pressure differential across the RO membrane units. This pressure differential can be at least equal to or higher than the osmotic pressure of the saline water surrounding the RO station. A higher pressure differential across the RO membrane units may enable the generation of a greater amount of fresh water. An increased fresh water production rate and improved quality of permeate may be achieved by adjusting the pressure differentials. The RO station can be located at depths of water greater than that required to achieve a desired osmotic pressure, while controlling the permeate side pressure by including static head loops to impart back pressures on the permeate flow upstream of the sub-sea pump.

The underwater conduits may be made of large diameter, low-cost, poly-nylon based, flexible, bendable houses or pipes, except at certain connecting regions where extra stiffness may be provided. The one or more fresh water sub-sea storage tanks may be made of flexible, bendable, impermeable membrane-type materials capable of delivering storage water to a surface location without using a pump or energy input, based on the u-tube manometer principle. Because of a pressure equilibrium from inside to outside, the tanks can be made from low-cost membrane-type materials.

In one aspect, a reverse osmosis sub-sea desalination system is disclosed. The reverse osmosis system may include a reverse osmosis station configured to generate fresh water from salty water, a storage tank configured to store fresh water downstream of the reverse osmosis station, and a pump fluidly connected to the reverse osmosis station and the storage tank. The reverse osmosis station, the storage tank, and the pump may be disposed at one or more depths beneath a surface of a body of salty water.

In another aspect, a reverse osmosis station configured to generate fresh water from salty water is disclosed. The reverse osmosis station may include a support extending to a floor of the body of salty water, wherein the support includes a collecting pipe. The reverse osmosis station may also include a membrane device fluidly connected to the collecting pipe, and an accumulator fluidly connected to the collecting pipe. The membrane device may be configured to filter a flow of salty water through the membrane device and into the collecting pipe such that the collecting pipe collects fresh water.

In yet another aspect, a method of producing fresh water from salty water is disclosed. The method may include generating fresh water from a body of salty water by reverse osmosis, pumping the fresh water to an underwater storage tank, and storing the fresh water in the storage tank.

In another aspect, a method of storing fresh water in a storage tank located below a surface of a body of salty water is disclosed. The method may include filtering a flow of salty water past a membrane device, passing a flow of fresh water through a membrane of the membrane device and into a collecting pipe, controlling a pressure differential across the membrane device, and pumping the flow of fresh water to the storage tank.

### BRIEF DESCRIPTION OF THE FIGURES

FIG. 1 is a general schematic view of an embodiment of a sub-sea RO desalination system.
FIG. 2 is a general schematic view of another embodiment of a sub-sea RO desalination system.
FIG. 3 is a general schematic view of yet another embodiment of a sub-sea RO desalination system.
FIG. 4 is a detailed view of an exemplary membrane device of the RO desalination system shown in FIGS. 1-3.
FIG. 5 is a general schematic view of an embodiment of a sub-sea RO desalination system according to the present invention with a rectangular shaped RO membrane station and sub-sea tracking assembly along with of a cluster of sub-sea fresh water storage tanks.
FIG. 6 is a general schematic view of another embodiment of a sub-sea RO desalination system according to the present invention with a rectangular shaped RO membrane station and sub-sea tracking assembly along with of a cluster of sub-sea fresh water storage tanks.
FIG. 7 is a general schematic view of yet another embodiment of a sub-sea RO desalination system according to the present invention with a rectangular shaped RO membrane station and sub-sea tracking assembly along with of a cluster of sub-sea fresh water storage tanks.
FIG. 8A is a detailed view of an RO semi-impermeable membrane design according to the present invention.
FIG. 8B is a cross-sectional view of the RO semi-impermeable membrane design of FIG. 8A.
FIG. 9A is a detailed view of an exemplary storage tank of the present invention.
FIG. 9B is a detailed view of another exemplary storage tank of the present invention.
FIG. 9C is a detailed view of yet another exemplary storage tank of the present invention.
FIG. 9D is a detailed view of another exemplary storage tank of the present invention.
FIG. 10A is a detailed view of an exemplary baffled intake design.
FIG. 10B is a detailed view of another exemplary baffled intake design.

### DESCRIPTION OF THE DISCLOSED EMBODIMENTS

As described herein, there are two main desalination methods of salty water. The oldest is thermal distillation, which generally consumes a large amount of energy. The second method is RO, and although RO energy consumption may be much less than thermal distillation energy consumption, currently both systems may be prohibitively expensive, especially for developing nations. Therefore, the present invention includes an affordable deep sea or brackish water RO desalination system.

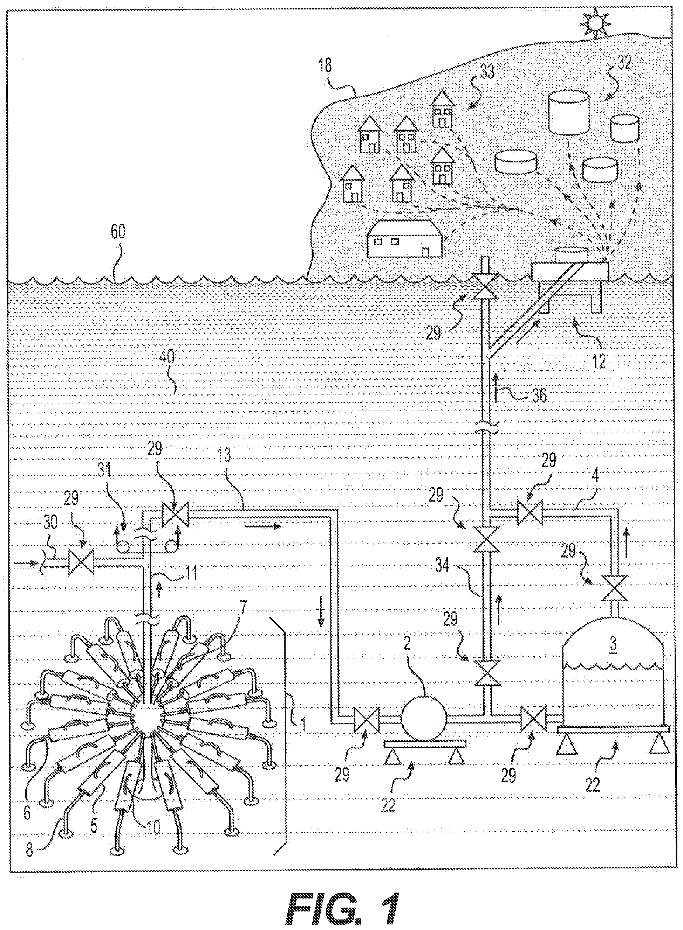

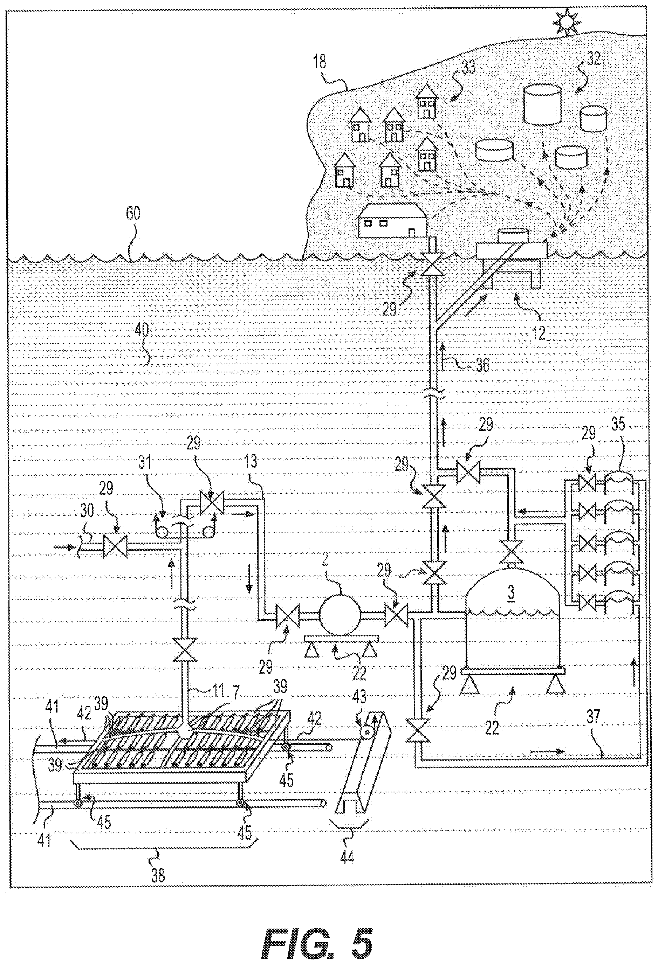

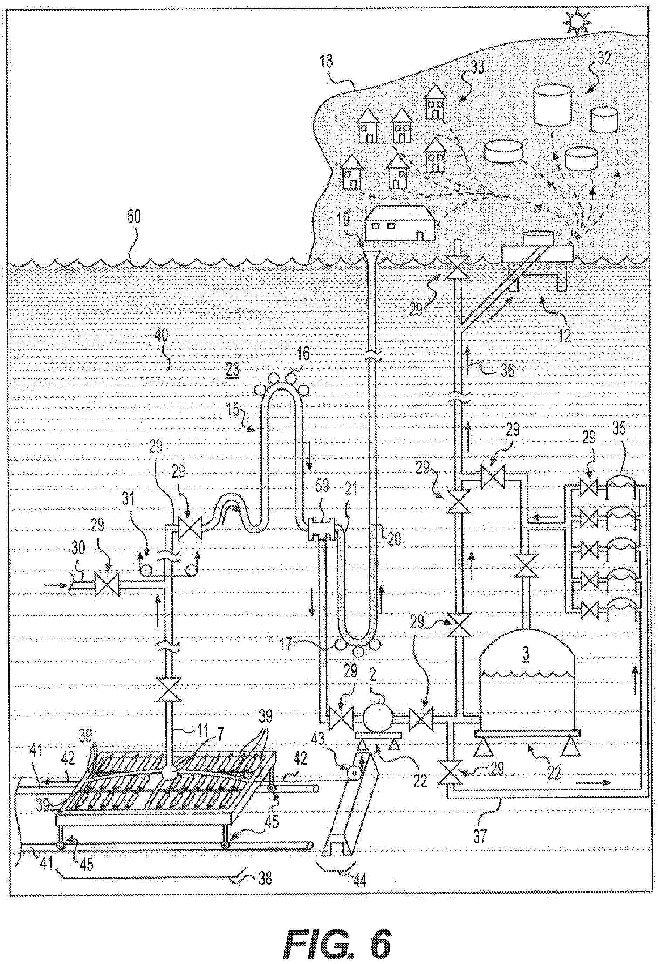

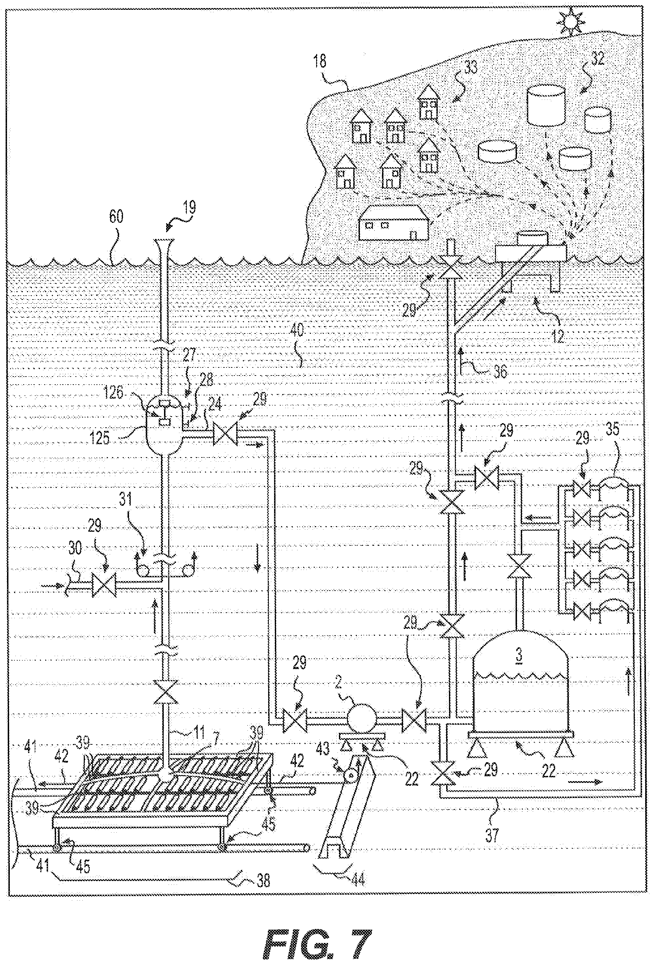

FIGS 1-3 show general schematic views of various embodiments of a sub-sea RO desalination system Figures 5-7 illustrate the basic concept behind the sub-sea-based RO desalination system of this invention, including various features, methods, apparatuses, and associated flow processes.

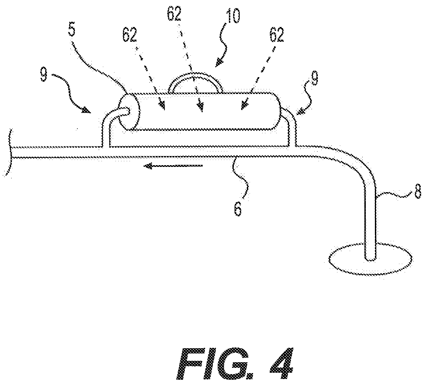

As shown in FIGS. 1-3, there may be three main components that make up the entire system: (i) the deep water RO semi-permeable membrane assembly 1; (ii) a pump 2 and associated piping arrangement; and (iii) one or more underwater storage tanks 3 connected to the sea surface by a flexible conduit 4. The conduit 4 may also be referred to herein as an exit or discharge conduit, which extends at least to the surface of the body of water. The RO membrane assembly 1, which may also be referred to as an RO membrane unit, an RO membrane station, an RO station, or the like, may be constructed using off-the-shelf cylindrical membrane filters, which can be arranged in any desired geometric shape. For example, the filters may be arranged in a circular, rectangular, square, or other pattern. A circular, or spider-leg, design is shown in FIGS. 1-3. In these figures, each cylindrical shaped membrane device 5, which may lack an outermost protective casing so as to be exposed directly to sea water, may be secured over a fresh water collecting pipe 6 of the entire frame. The pipe 6 may support the membrane filter device 5 from both ends, and a flow of sea water 62 may flow into the membrane device (FIG. 4). One end of the fresh water, or permeate, collecting pipe 6 is connected to a main fresh water accumulator 7, while the other end extends to the sea floor and may form a support 8, such as a support leg, to support the assembly 1. As shown in FIGS. 1-3, this arrangement may be repeated for each cylindrical membrane device 5. Using already developed offshore oil & gas technology, techniques, and devices (e.g., remote operated vehicle ("ROV"), pipe laying equipment installment, clamps, quick connect/disconnect parts including valves, and sub-sea pumps), along with a cable rope operation from surface, each membrane device 5 can be periodically removed to the sea surface for various purposes, such as cleaning. Alternatively, each membrane device 5 may be cleaned in situ beneath the surface of the water. The membrane cylinders 5 may be connected with quick connect/disconnect elements 9, such as clamps and shut-off valves, which may help both removal and installation operations while preventing sea water from entering the fresh water side of the system. Each membrane cylinder 5 may also be equipped with a pull bar 10, configured to be caught by a cable-rope operated hook system 31.

The fresh water (permeate) flowing from each cylindrical RO membrane filtering device 5 can flow into the main accumulator 7. The RO desalination process may be a filtering process and a purification process. FIGS. 1-3 show a sub-sea pump 2, which may be connected to a fresh water accumulator exit line 11, and which is configured to pump out incoming permeate to one or more underwater storage tanks 3, or to a floating surface pumping station 12. The pump 2, which may initiate operation of the RO desalination system and enable a steady flow of permeate removal, may be the only piece of equipment in the RO desalination system of FIGS. 1-3 (and FIGS. 5-7) where an amount, for instance a substantial amount, of energy input is needed, providing that frictional energy losses across the piping system may be negligible. As described herein, pump energy consumption (neglecting frictional losses) may be equal to an RO desalination energy used to generate a unit volume of fresh water (permeate) under required osmotic pressure. Because of equal pressure heads, based on the u-tube manometer principle, pumping power may be the same whether permeate is being pumped to one or more nearby storage tanks 3 or upwards to a sea surface station 12, again neglecting frictional losses.

The osmotic pressure of the present application is the reservoir of the static pressure field of the deep sea water. The pressure differential across the RO cylindrical membrane device 5 may be created by control of the sub-sea pump 2. For example, if the pump 2 is connected directly to the fresh water accumulator 7, a suction pressure of the pump 2 may be equal to zero gage pressure, and a discharge pressure may be equal to the osmotic pressure, neglecting frictional losses across the piping system. Installing a sub-sea RO system at a depth that is exactly equal to the osmotic pressure of the saline water at a particular location may not allow for optimum system performance. Instead, the RO membrane assembly may be installed at a depth greater than the osmotic pressure corresponding to the salty water conditions at that depth, wherein such conditions include salinity and temperature. For example, if the salinity of a given body of water has a corresponding osmotic pressure of 35 bar, and if a static pressure of 35 bar can be achieved at a depth of 350 m, the RO system may be installed at a depth greater than 350 m. Greater depths of installation of the RO system can improve system performance, which may include enabling a higher system output of fresh water.

The sub-sea RO desalination systems and methods of the present invention provide options that may enhance the amount (output) and quality of the permeate, robustness of the operation, and process control using various techniques and methods. For example, the sub-sea pump 2 handling permeate flow can be connected to the exit conduit 11 of the fresh water accumulator 7 in several ways as shown in FIGS. 1-3. As a non-limiting example, each of FIGS. 1-3 illustrates a different connection of the pump 2 to the fresh water accumulator 7 of the RO membrane assembly 1.

FIG. 1 shows a suction side of the pump 2 being directly connected via a direct connection conduit 13 to the accumulator exit conduit 11. With this mode, the upstream permeate generation process across the RO membrane units may fluctuate.

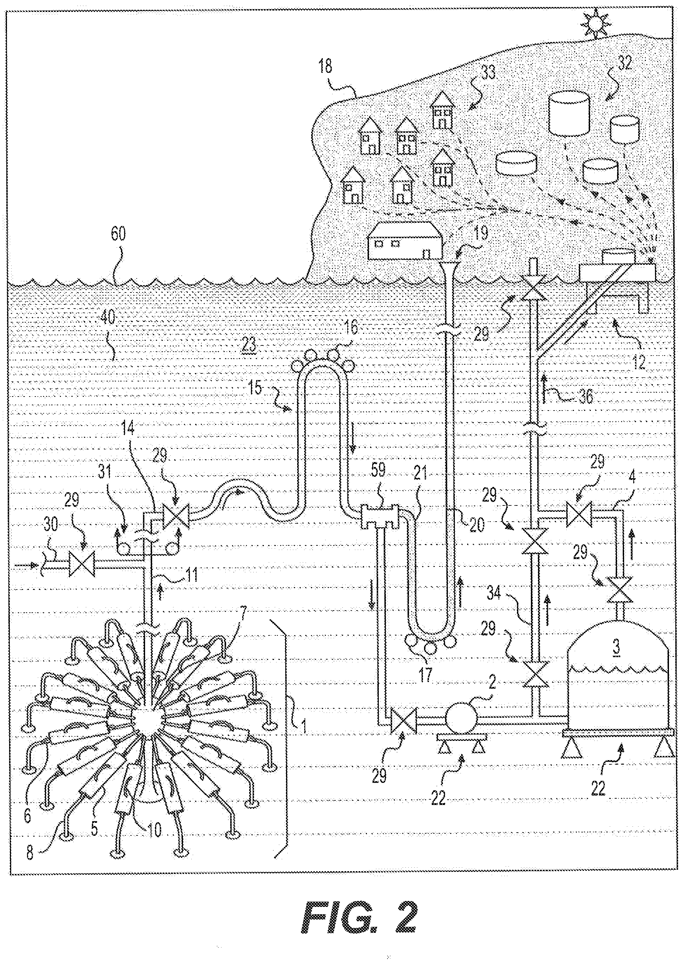

FIG. 2 illustrates another connection between the pump 2 and the accumulator 7, wherein stable operation may be achieved if a predetermined head pressure acting on permeate generation is applied. A desired static head, imparting pressure on a fresh water side, can be adjusted by lowering or lifting a u-shaped portion of piping, which may be referred to herein as u-tube portion 15 of a pump suction line 14. The u-tube portion 15, which may include a junction, such as a three-way junction 59, may be lowered or lifted by using a surface controlled cable-rope system. Alternatively or additionally, the u-tube portion 15 may be lifted using floats 16, such as poly-nylon floats, and lowered using weights 17, such as metal weights. In some instances, the part of the u-tube portion 15 having the weights 17 may physically contact and be supported by the sea bed 40. As shown in FIG. 2, the end of the u-tube may be open to atmospheric pressure 19. The water levels 20, 21 within the columns of the u-tube portion 15 may be equal and stationary, while there is a steady flow of permeate from an elevated level 23 of the water and a steady supply of fresh water/permeate to the pump located at the seafloor.

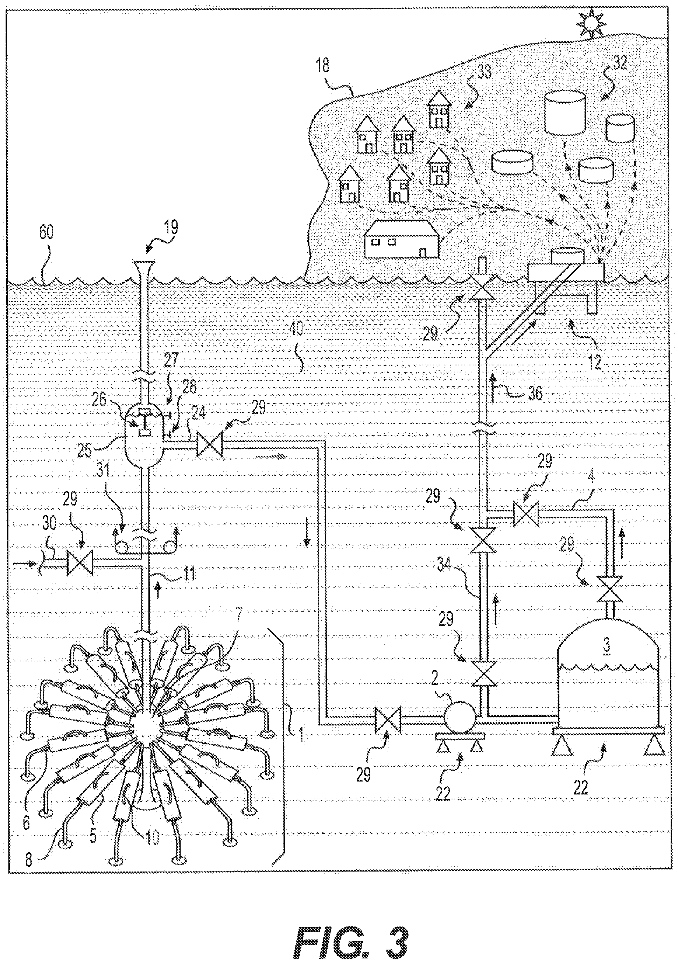

FIG. 3 shows yet another option for connecting the pump 2 to the accumulator 7, wherein the pump 2 is connected via conduit 24 to a balancing tank 25, which may be open to atmospheric pressure 19. The balancing tank 25 may include a floating switch 26, a pump start device 27, and a pump stop device 28. The pump start and stop devices 27, 28, which may be buttons, switches, or the like, may enable various modes or tank water levels to be realized. The connection between the pump 2 and accumulator 7 illustrated in FIG. 3 and described herein may enable better process control, including permeate quality and permeate generation rate. For example, when deep water pressure is much more than osmotic pressure (i.e., when the RO system is arranged at a greater depth than may actually be required), due to a much larger pressure differential across membrane units 5, the flow across the membrane can be turbulent, and/or may have less residence time for adequate removal of dissolved solids, including salt, yielding lower-quality permeate to the accumulator. These and various other processing problems may be eliminated or minimized by applying an amount of pressure on the permeate side, while achieving smooth operation of the RO desalination system.

The underwater conduits illustrated in the figures may be large diameter, low-cost, poly-nylon based, flexible, bendable hoses or pipes. However, at various connecting regions where extra stiffness is needed, more rigid piping and or components, such as junction 59 (FIG. 2) may be used. Furthermore, except for conduits located on an upstream side of the pump 2 and the conduits open to atmospheric air 19, the remainder of the conduits (i.e., conduits downstream of the pump 2) may be filled with the fresh water at a pressure equilibrium with the surrounding sea water. Therefore, there may be no need to use potentially expensive, high-strength conduits on the downstream side of the pump 2. Additionally, all junctions of conduits in the various illustrated and described RO systems may be equipped with remotely operated control valves 29 placed at inlet and exit sides of the equipment, including the pump 2 and the connection of two conduits. Although FIGS. 1-3 (and FIGS. 5-7) show the control valves 29 schematically positioned at certain locations of the various RO desalination systems, more or fewer control valves 29 may be arranged at other locations along the system conduits.

In accordance with the present invention, total fresh water production capacity can be increased in several ways. Because there may be minimal or no space restriction at deep water levels, the number of RO membrane units 1 for a given RO desalination system may be increased, such that there may be a plurality of RO membrane assemblies 1. Additionally or alternatively, a cluster of RO membrane assemblies (stations) 1 may be located within close proximity to one another. The fresh water produced from each station can be collected at one location and within one accumulator 7 without building a separate piping system. As shown in FIG. 1, a separate RO station 1 may include a fresh water discharge pipe 30 for connecting to another RO station 1. In this instance, a flow rate capacity of the pump 2 may be compatible with a total incoming fresh water flow rate.

Each RO membrane station 1 can be maneuvered or pulled up, either in whole or in various parts, beyond the water line 60 and to the sea surface periodically for cleaning or other maintenance purposes. This may be accomplished, for instance, by using a cable-rope pulley system 31. Quick connect/disconnect elements or clamps 9 (FIG. 4) can be utilized to separate the main membrane station from the surrounding equipment including the conduits. As described herein, offshore sub-sea equipment installment and replacement technology is well developed and may be utilized for this invention, rather than designing such equipment anew. Therefore, the present disclosure will not describe details of potential sub-sea RO equipment installment issues.

Using the RO desalination method, the present invention may enable production of large amounts of fresh water, as well as the storage of fresh water within one or more sub-sea storage tanks 3. In some instances, one or more of the storage tanks 3 may have a large capacity for storing fresh water. The sub-sea storage tank 3 of the present invention may be configured in a variety of shapes, and may be made of impermeable, flexible, collapsible membrane-type and seawater compatible materials. In some instances, the tank 3 may be configured to collapse into a deflated, bag-like shape when fresh water is extracted from the tank 3, and the tank 3 may be configured to form into another shape when fresh water is injected into the tank 3. Due to the membrane material used to construct the storage tanks 3 of the present invention, the fresh water inside the tank 3 may be at a pressure equilibrium with the surrounding seawater pressure. Therefore, the fresh water can rise to the sea surface 60 without using any pumping equipment (in light of the u-tube manometer principle and density differences between salt water and fresh water), when there is a sufficient amount of fresh water in the tank. A sufficient amount of fresh water in the tank 3 may be an amount that is equal to or more than the volume of the discharge conduit 4 extending to the sea surface 60. At the sea surface 60, there may be a floating surface pump station 12 equipped with an accumulation tank. From the surface pump station 12, fresh water can be distributed to onshore locations, including land-based storage tanks 32, residential buildings 33, industrial complexes, irrigation ponds or tanks, and the like.

Because the sub-sea storage tank 3 may be at a pressure equilibrium from inside to outside, the tank 3 can be constructed from low-cost impermeable flexible materials, as opposed to standard design procedure in which expensive construction materials, such as high strength steels or metal alloys, are typically used to construct high pressure storage vessels. The storage tank 3 can be secured to the sea floor by adding weight at the bottom side, and may be supported by a support structure 22. The pump 2 may also be supported by a support structure 22. Tanks 3 may be in contact with surrounding sea water from all sides and all directions, including a bottom of the tank 3, whereby the "bottom" may correspond to a side or portion of the tank 3 closest to the sea bed or floor 40.

In the present invention, the size of the sub-sea storage tank 3 is not necessarily limited. In some instances, for strategic and operational purposes, instead of building one large storage tank, a plurality of interconnected midsize or smaller tanks 35 can be built and connected via a connecting conduit 37 at the sub-sea fresh water storage facility, as shown in FIGS. 5-7. Furthermore, the proximity of the tanks 3, 35 to shoreline or the geometric shape of the sea bed 40 (e.g., hilly, flat, valley) may have little or no effect on the free flow (i.e., flow without a pump) of fresh water 36 from one or more of the sub-sea tanks 3, 35 to the sea surface next to the land because the fundamentals and principles are similar to those of an oddly-shaped u-tube manometer. However, if fresh water generated from the RO station was pumped directly to the shoreline via conduit 34, the pump 2 may consume more power because of the extended length of the of the conduit 34 connecting the pump 2 to the shoreline location.

The deep water RO membrane assembly 1 can be configured in a variety of different geometric shapes, including but not limited to a circular, or spider-like shape, as shown and described with respect to FIGS. 1-3. According to the present invention, as shown in FIGS. 5-7, a rectangular-shaped RO membrane assembly 38 is provided instead of the spider-like assembly. In the system shown in FIGS. 5-7, permeate from both ends of each cylindrical membrane unit 5 may be collected within larger diameter pipes 39. The pipes 39, which may also function as a system support frame, connect to the main accumulator 7. FIGS. 5-7 illustrate the same three exemplary connection options for connecting the accumulator exit line 11 with the pump 2 as shown and described with respect to FIGS. 1-3. Unlike the embodiments shown in FIGS. 1-3, the systems of FIGS. 5-7 utilize a rectangular-shaped RO membrane assembly 38, as well as a plurality of midsize or smaller sub-sea tanks 35.

Either RO membrane assembly 1, 38 may be moved to various locations of the sea bed 40 periodically rather than operating continuously at the same place, as doing so may result in a heavily salt-concentrated region at the sea bed 40. The RO membrane assembly 1, 38 can be moved in various ways, including physically picking up the RO membrane assembly 1, 38 via a surface-operated mechanism, such as a cable-rope system 31, and dropping the RO membrane assembly 38 at a different location. The technique for moving the RO membrane assembly 38 according to the invention is shown in FIGS. 5-7. Specifically, a sea-bed-installed tracking system is used to move the RO membrane assembly 38. The tracking system may include a track 41, a cable-rope 42, a pulley 43, and a support, wherein the pulley 43 and support may be collectively referred to as a cable-rope pulley station 44. Moreover, the cable-rope 42 and cable-rope pulley station 44 may be collectively referred to as a cable-rope pulley system. In some instances, a cable-rope pulley station 44 can be located on each end of the track 41, and the stations 44 may be spaced a distance apart from each other. In some instances, the stations 44 may be spaced one or more miles apart. From time to time, the entire RO assembly 38 may be moved (pulled) back and forth by the cable-rope pulley system between two pulley stop stations 44, to a variety of different locations of the sea bed 40. Due to long and flexible conduits (extra loop) that may lay on the sea bed 40, the RO assembly 38 may not be restricted during travel along the track 41 from location to location. The RO assembly 38 can ride on rotating support legs 45, which may include wheels, rollers, casters, or the like, while the legs 45 are engaged with the track 41. The RO assembly 38 and the tracking system may be collectively referred to herein as an RO station.

As described herein, the various sub-sea RO desalination systems can be configured and operated in many different ways because of the availability of a practically limitless supply of seawater and pressure field from the surrounding water. Although shown substantially horizontal to the sea bed 40 in FIGS. 1-7, in some examples the RO membrane cylinders 5 can be positioned substantially vertically with respect to the sea bed 40, such that the permeate flow and distribution may be affected slightly due to the effects of gravity. Additionally, vertically-oriented RO membrane cylinders 5 may be easier to clean than horizontally-oriented cylinders 5, as vertical RO membrane cylinders 5 may be washed with surface-pumped warm sea water without using much pumping energy. Because static pressure (weight per unit area) generated by incoming surface water may be equal to the sub-sea water pressure (neglecting, for example, small variations due to salt contents), a small amount of extra pumping head (i.e., pressure) may be sufficient to dump surface water into the sub-sea region while cleaning membrane filter elements. Furthermore, in some instances of the present invention, sub-sea RO station seawater may be pumped from a warmer sea surface more efficiently than a land-based system. Accordingly, a separate conduit can be added if a sub-sea membrane cleaning design and warmer surface water are included as part of the overall RO desalination system of the present invention.

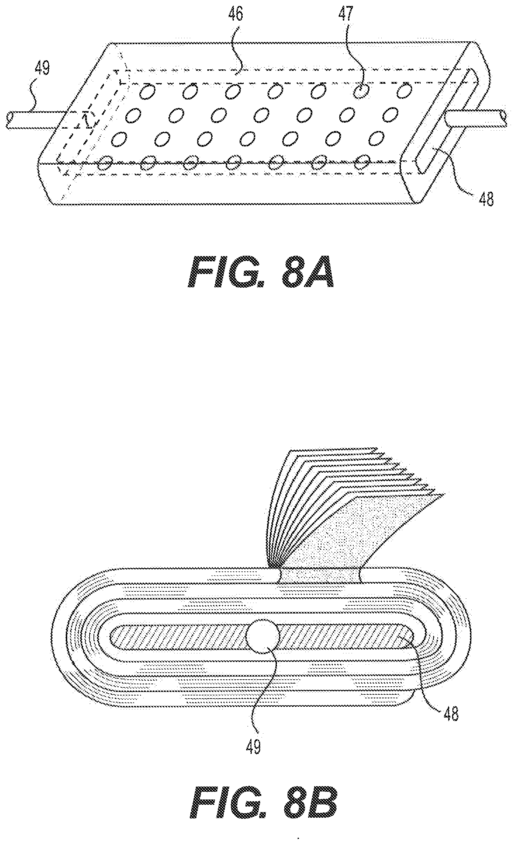

Instead of using off-the-shelf membrane devices to achieve a large capacity sub-sea RO assembly, a large membrane unit, or several membrane units, may be custom designed for developing a more robust and simple underwater desalination system. For example, in FIGS. 8A, 8B, a large rectangular shaped membrane design and its cross-sectional view are shown, respectively. The core section may be a rectangular (semi-oval) permeate collecting duct 46. The duct 46 may be perforated and include a plurality of perforations 47, which may be referred to as openings, apertures, or the like. Core duct ends 48 can be capped, except that permeate exit pipes 49 may exit from the ends 48 to carry fresh water to the system accumulator 7. Various other membrane designs may also be employed in the systems and methods of the present invention.

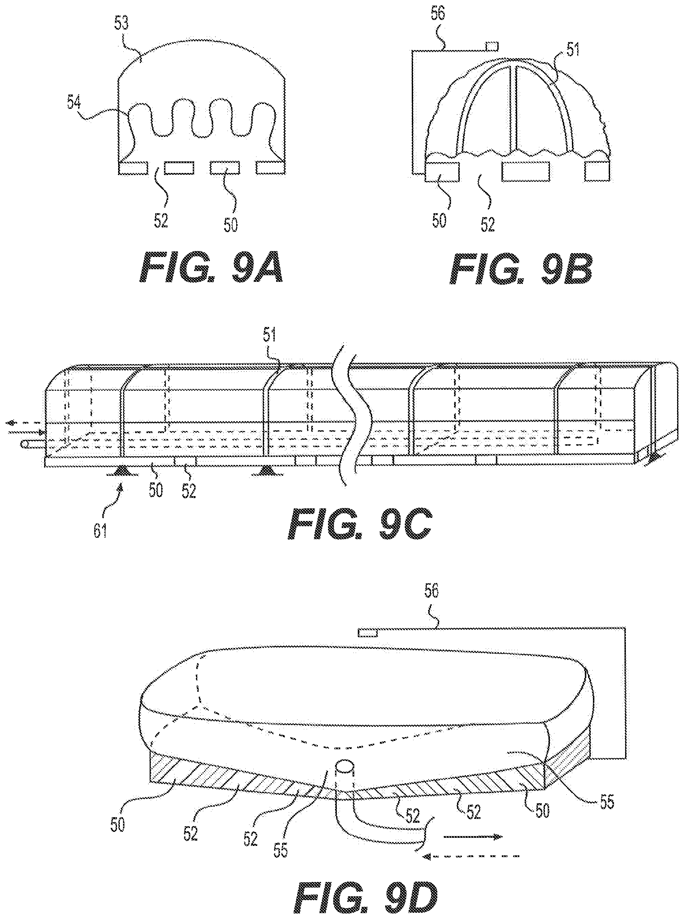

As described herein, the one or more sub-sea fresh water storage tanks 3, 35 may enable large volumes of fresh water production and storage. The sub-sea storage tanks 3, 35 can be designed to have various different shapes and configurations. FIGS. 9A, 9B, 9C, 9D illustrate four exemplary storage tank designs. For example, FIG. 9A depicts a cylindrical tank, FIG. 9B shows a tank formed as a half sphere, Fig. 9C illustrates a long, rectangular-shaped tank, and FIG. 9D depicts an oval-shaped storage tank. These tanks can be made of flexible, bendable, collapsible, impermeable, and/or seawater compatible membrane type materials. Moreover, in some instances the various tanks can be secured to the sea floor by weights 50, while high strength straps 51, or flat fabrics such as Kevlar, carbon, or other poly-based materials, may be used to strengthen the overall tank structure. Because they can be disposed at deep water levels, surfaces of the various tanks are exposed to seawater. Accordingly, a bottom side of the tanks may include open ports 52 on or along the frame or weighted structure, so that deep seawater pressures can be transferred over the fresh water inside the tank while separating fresh water from salty water. One or more of the tanks of the present invention could be made from solid materials 53 such as steel, plastic, or various composites. Whichever material is used to construct the tank, the material may have a flexible and impermeable membrane configured to separate tank storage fluid (i.e., fresh water) and the surrounding salty water. In one example shown in FIG. 9A, a flexible, bendable membrane operating as a partition 54 may be large enough and capable of wrapping around an entire inside surface of the tank when the tank has no fresh water. Thus, the fresh water stored within the tank may be at a pressure equilibrium with the surrounding fluid due to the force-transferring capability of the flexible membrane structure. Also, in order for the fresh water stored within the tank to be discharged easily, as shown in FIG. 9D the tank bottom shaped area may be at an elevation 55 that is lower than the elevation of other sides of the tank. Additionally, water levels within the various tanks can be measured by including one or more mechanical indicators 56 as shown in FIGS. 9B, 9D.

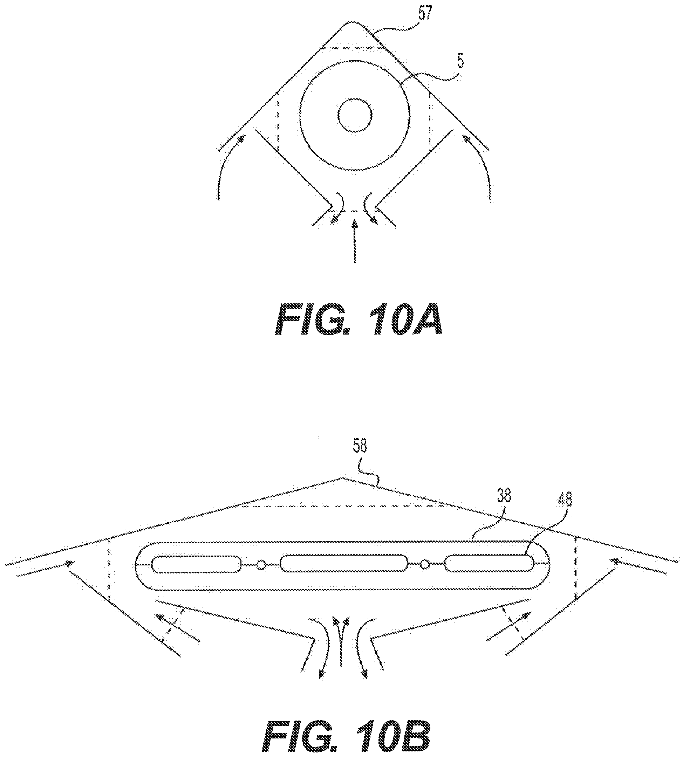

Although sea water at depths of about 250+ m is generally darker than sea water at lesser depths, deeper sea water may be much cleaner, having less floating micro-particles and being almost free of fish eggs compared to near-surface, warmer sea water, from which land-based RO systems typically obtain salty feed water. Although the sub-sea RO desalination system described in this invention has advantages over a land-based RO systems regarding, for instance, the quality of the intake water, the systems of the present invention may be further improved by adding baffled intake designs as shown in FIGS 10A, 10B. For example, FIG. 10A shows a fish-like cap baffle 57 covering or surrounding a standard, off-the-shelf RO membrane cylinder 5. FIG. 10B illustrates a baffle cap 58 similar to that shown in FIG. 10A, except that the baffle cap 58 of FIG. 10B may cover or surround an entire custom-made large RO membrane filtering device 48. The baffle caps 57, 58 can be made from low-cost, seawater materials such as plastic, composites, or other poly-based materials. Using baffle caps 57, 58 may facilitate the settlement of both organic and inorganic dissolved or floating micro-materials before they reach the RO membrane devices 5, 38, 48.

It will be apparent to those skilled in the art that various modifications and variations can be made to the disclosed invention. Other embodiments will be apparent to those skilled in the art from consideration of the specification and practice of the disclosed RO desalination systems and methods. It is intended that the specification and examples be considered as exemplary only, with a true scope being indicated by the following claims.

## Claims

1. A rectangular-shaped reverse osmosis sub-sea desalination system, comprising:
a reverse osmosis membrane assembly (38) configured to generate fresh water from salty water; a storage tank (3) configured to store fresh water downstream of the reverse osmosis membrane assembly (38); and
a pump (2) fluidly connected to the reverse osmosis membrane assembly (38) and the storage tank (3), wherein the reverse osmosis membrane assembly (38), the storage tank (3), and the pump (2) are disposed at one or more depths beneath a surface of a body of salty water;
wherein the reverse osmosis membrane assembly (38) comprises: a tracking system including:
a track (41) disposed on a floor of the body of water; and
a cable-rope pulley station (44);
the membrane assembly (38) configured to be moved along the track by a cable connected to the cable-rope pulley station (44); and
an accumulator (7) configured to accumulate the generated fresh water, wherein the accumulator (7) collects the fresh water from the membrane assembly (38) and then via pump (2) transfers the fresh water to the storage tank (3), from which the fresh water is pumped upwards to a sea surface floating pumping station (12).

2. The system of claim 1, wherein the cable-rope pulley station (44) is disposed at one end of the track (41), and wherein the tracking system further comprises an additional cable-rope pulley station disposed at another end of the track (41); or further comprising a plurality of additional storage tanks (35) configured to store the fresh water.

3. The system of claim 1, wherein the storage tank (3) is constructed of an impermeable, collapsible material such that the storage tank (3) is configured to collapse when fresh water is extracted from the storage tank (3).

4. The system of claim 1, further comprising a plurality of additional storage tanks (35) configured to store the fresh water.

5. The system of claim 1, wherein the reverse osmosis membrane assembly (38) comprises a membrane device (5) having a plurality of perforations fluidly connected through a duct to a permeate exit pipe.

6. The system of claim 1, wherein the storage tank (3) comprises at least one weight configured to secure the storage tank (3) to a floor of the body of water or wherein the storage tank (3) comprises at least one port disposed adjacent to a floor of the body of water; or wherein the storage tank (3) comprises a mechanical indicator configured to measure a water level within the storage tank (3).

7. The system of claim 1, wherein the reverse osmosis membrane assembly (38) comprises a membrane device, and wherein a baffle cap surrounds the membrane device (5).

8. The system of claim 1, further comprising a plurality of control valves configured to control the flow of fresh water through the system; or further comprising a cable-rope system operable from land and configured to maneuver the reverse osmosis membrane assembly (38) beneath the surface of the body of salty water; or comprising a pump suction conduit having a u-tube portion configured to be lifted using floats and lowered using weights, wherein the u- tube portion is open to atmospheric pressure; or comprising a balancing tank open to atmospheric pressures and disposed between the reverse osmosis membrane assembly (38) and the pump.

9. A method of producing fresh water from salty water using the system according to claim 1, comprising:
generating fresh water from a body of salty water at a location under the surface of the body of salty water by reverse osmosis;
pumping the fresh water to an underwater storage tank (3); and
storing the fresh water in the storage tank (3), wherein the membrane assembly (38) generates the fresh water, and wherein the method further comprises selectively moving the membrane assembly (38) along the track (4) disposed on a floor of the body of salty water, by the cable (42) connected to the cable-rope pulley station (44), and accumulating generated fresh water in the accumulator (7).

10. The method of claim 9, comprising pumping the fresh water from the storage tank (3) to a floating pumping station (12) on the surface of the body of salty water; or
wherein the fresh water stored in the tank (3) is stored at a pressure equilibrium with the surrounding body of salty water, and wherein the pressure equilibrium causes the pumping of the fresh water to the pumping station (12); or wherein the reverse osmosis membrane assembly (38) generates the fresh water, and wherein the method further comprises periodically varying the location of the reverse osmosis membrane assembly (38); or wherein the fresh water is generated by filtering a flow of salty water past a membrane device (5) supported by a floor of a body of water.

11. The method of claim 9, comprising storing the fresh water in additional storage tanks (35) disposed in the body of salty water; optionally wherein each side of each storage tank (35) is exposed to pressures of the body of salty water; or wherein a volume of the fresh water stored in the storage tank (35) is greater than or equal to a volume of an exit conduit extending to a surface of the body of salty water.

## Patentansprüche

1. Rechteckig geformtes Umkehrosmose-Untersee-Entsalzungssystem, das Folgendes umfasst:
eine Umkehrosmose-Membrananordnung (38), die konfiguriert ist, um Frischwasser aus salzigem Wasser zu erzeugen; einen Speicherbehälter (3), der konfiguriert ist, um Frischwasser stromabwärts von der Umkehrosmose-Membrananordnung (38) zu speichern; und
eine Pumpe (2), die fluidisch mit der Umkehrosmose-Membrananordnung (38) und dem Speicherbehälter (3) verbunden ist, wobei die Umkehrosmose-Membrananordnung (38), der Speicherbehälter (3) und die Pumpe (2) auf einer oder mehreren Tiefen unter einer Oberfläche eines Körpers aus salzigem Wasser angeordnet sind;
wobei die Umkehrosmose-Membrananordnung (38) Folgendes umfasst: ein Nachführungssystem, einschließlich:
eine Laufbahn (41), die auf einem Boden des Wasserkörpers angeordnet ist; und
eine Kabel-/Seilzugstation (44);
wobei die Membrananordnung (38) konfiguriert ist, um über ein Kabel, das mit der Kabel-/Seilzugstation (44) verbunden ist, entlang der Laufbahn bewegt zu werden; und
einen Speicher (7), der konfiguriert ist, um das erzeugte Frischwasser, zu akkumulieren, wobei der Speicher (7) das Frischwasser aus der Membrananordnung (38) sammelt und dann das Frischwasser über die Pumpe (2) zu dem Speicherbehälter (3) überträgt, von wo das Frischwasser aufwärts zu einer an der Meeresoberfläche schwimmenden Pumpstation (12) gepumpt wird.

2. System nach Anspruch 1, wobei die Kabel-/Seilzugstation (44) an einem Ende der Laufbahn (41) angeordnet ist, und wobei das Nachführungssystem ferner eine zusätzliche Kabel-/Seilzugstation umfasst, die an einem anderen Ende der Laufbahn (41) angeordnet ist; oder ferner umfassend eine Vielzahl von zusätzlichen Speicherbehältern (35), die konfiguriert sind, um das Frischwasser zu speichern.

3. System nach Anspruch 1, wobei der Speicherbehälter (3) aus einem undurchlässigen, faltbaren Material gebaut ist, sodass der Speicherbehälter (3) konfiguriert ist, um zusammengefaltet zu werden, wenn Frischwasser aus dem Speicherbehälter (3) extrahiert wird.

4. System nach Anspruch 1, ferner umfassend eine Vielzahl von zusätzlichen Speicherbehältern (35), die konfiguriert sind, um das Frischwasser zu speichern.

5. System nach Anspruch 1, wobei die Umkehrosmose-Membrananordnung (38) eine Membranvorrichtung (5) mit einer Vielzahl von Perforationen umfasst, die fluidisch durch einen Kanal mit einer Permeat-Auslassrohrleitung verbunden ist.

6. System nach Anspruch 1, wobei der Speicherbehälter (3) mindestens ein Gewicht umfasst, das konfiguriert ist, um den Speicherbehälter (3) an einem Boden des Wasserkörpers zu halten, oder wobei der Speicherbehälter (3) mindestens einen Anschluss umfasst, der anliegenden an einem Boden des Wasserkörpers angeordnet ist; oder wobei der Speicherbehälter (3) eine mechanische Anzeige umfasst, die konfiguriert ist, um einen Wasserstand in dem Speicherbehälter (3) zu messen.

7. System nach Anspruch 1, wobei die Umkehrosmose-Membrananordnung (38) eine Membranvorrichtung umfasst, und wobei eine Schwallkappe die Membranvorrichtung (5) umgibt.

8. System nach Anspruch 1, ferner umfassend eine Vielzahl von Regelventilen, die konfiguriert sind, um den Strom aus Frischwasser durch das System zu regulieren; oder ferner umfassend ein Kabel-/Seilsystem, das von Land aus betrieben werden kann und konfiguriert ist, um die Umkehrosmose-Membrananordnung (38) unter der Oberfläche des Körpers aus salzigem Wasser zu manövrieren; oder umfassend einen Pumpensaugkanal mit einem U-förmigen Rohrabschnitt, der konfiguriert ist, um mittels Schwimmer angehoben und unter Verwendung von Gewichten abgesenkt zu werden, wobei der U-förmige Rohrabschnitt an die Atmosphäre offen ist; oder umfassend einen Ausgleichsbehälter, der an die Atmosphäre offen ist und zwischen der Umkehrosmose-Membrananordnung (38) und der Pumpe angeordnet ist.

9. Verfahren zum Erzeugen von Frischwasser aus salzigem Wasser unter Verwendung des Systems nach Anspruch 1, umfassend:
Erzeugen von Frischwasser aus einem Körper aus salzigem Wasser an einer Stelle unter der Oberfläche des Körpers aus salzigem Wasser durch Umkehrosmose;
Pumpen des Frischwassers zu einem Unterwasser-Speicherbehälter (3); und
Speichern des Frischwassers in dem Speicherbehälter (3), wobei die Membrananordnung (38) das Frischwasser erzeugt, und wobei das Verfahren ferner ein selektives Bewegen der Membrananordnung (38) entlang der Laufbahn (4), die auf einem Boden des Körpers aus salzigem Wasser angeordnet ist, durch das Kabel (42), das mit der Kabel-/Seilzugstation (44) verbunden ist, und Akkumulieren von erzeugtem Frischwasser in dem Speicher (7) umfasst.

10. Verfahren nach Anspruch 9, umfassend ein Pumpen des Frischwassers von dem Speicherbehälter (3) zu einer schwimmenden Pumpstation (12) an der Oberfläche des Körpers aus salzigem Wasser; oder wobei das Frischwasser, das in dem Behälter (3) gespeichert ist, in einem Druckgleichgewicht mit dem umgebenden Körper aus salzigem Wasser gespeichert ist, und wobei das Druckgleichgewicht das Pumpen des Frischwassers zu der Pumpstation (12) verursacht; oder wobei die Umkehrosmose-Membrananordnung (38) das Frischwasser erzeugt, und wobei das Verfahren ferner ein regelmäßiges Variieren der Stelle der Umkehrosmose-Membrananordnung (38) umfasst; oder wobei das Frischwasser durch Filtern eines Stroms aus salzigem Wasser nach einer Membranvorrichtung (5) erzeugt wird, die von einem Boden eines Wasserkörpers getragen wird.

11. Verfahren nach Anspruch 9, umfassend ein Speichern des Frischwassers in zusätzlichen Speicherbehältern (35), die in dem Körper aus salzigem Wasser angeordnet sind; optional wobei jede Seite von jedem Speicherbehälter (35) an Druck des Körpers aus salzigem Wasser ausgesetzt ist; oder wobei ein Volumen des Frischwassers, das in dem Speicherbehälter (35) gespeichert ist, größer als oder gleich wie ein Volumen eines Auslasskanals ist, der sich zu einer Oberfläche des Körpers aus salzigem Wasser erstreckt.

## Revendications

1. Système de dessalement sous-marin à osmose inverse de forme rectangulaire, comprenant :
un ensemble de membranes à osmose inverse (38) conçu pour produite de l'eau douce à partir de l'eau salée ; un réservoir de stockage (3) conçu pour stocker de l'eau douce en aval de l'ensemble de membranes à osmose inverse (38) ; et
une pompe (2) en communication fluidique avec l'ensemble de membranes à osmose inverse (38) et le réservoir de stockage (3), ledit ensemble de membranes à osmose inverse (38), ledit réservoir de stockage (3) et ladite pompe (2) étant disposés à une ou plusieurs profondeurs sous la surface d'une étendue d'eau salée ;
ledit ensemble de membranes à osmose inverse (38) comprenant : un système de guidage comprenant :
un chemin (41) disposé sur un fond de l'étendue d'eau salée ;
et une station de poulie à câble (44) ;
ledit ensemble de membranes (38) conçu pour être déplacé le long du chemin par un câble relié à la station de poulie à câble (44) ; et
un accumulateur (7) conçu pour accumuler de l'eau douce produite, ledit accumulateur (7) recueillant l'eau douce provenant de l'ensemble de membranes (38) et transférant ensuite, par l'intermédiaire de pompe (2), l'eau douce dans le réservoir de stockage (3), à partir duquel l'eau douce est pompée vers le haut jusqu'à une station de pompage flottante de surface de mer (12).

2. Système selon la revendication 1, ladite station de poulie à câble (44) étant disposée au niveau d'une extrémité du chemin (41), et ledit système de suivi comprenant en outre une station de poulie à câble supplémentaire disposée au niveau d'une autre extrémité du chemin (41) ; ou comprenant en outre une pluralité de réservoirs de stockage supplémentaires (35) conçus pour stocker de l'eau douce.

3. Système selon la revendication 1, ledit réservoir de stockage (3) étant constitué d'un matériau pliable, imperméable de sorte que le réservoir de stockage (3) est conçu pour se replier lorsque l'eau douce est extraite du réservoir de stockage (3).

4. Système selon la revendication 1, comprenant en outre une pluralité de réservoirs de stockage supplémentaires (35) conçus pour stocker de l'eau douce.

5. Système selon la revendication 1, ledit ensemble de membranes à osmose inverse (38) comprenant un dispositif à membrane (5) possédant une pluralité de perforations en communication fluidique par un conduit avec un tuyau de sortie de perméat.

6. Système selon la revendication 1, ledit réservoir de stockage (3) comprenant au moins un poids conçu pour fixer le réservoir de stockage (3) au fond de l'étendue d'eau ou ledit réservoir de stockage (3) comprenant au moins un orifice disposé adjacent au fond de l'étendue d'eau ; ou ledit réservoir de stockage (3) comprenant un indicateur mécanique conçu pour mesurer un niveau d'eau dans le réservoir de stockage (3).

7. Système selon la revendication 1, ledit ensemble de membranes à osmose inverse (38) comprenant un dispositif à membrane, et un couvercle déflecteur entourant le dispositif à membrane (5).

8. Système selon la revendication 1, comprenant en outre une pluralité de soupapes de commande conçues pour commander l'écoulement d'eau douce à travers le système ; ou comprenant en outre un système de câble pouvant fonctionner à partir de la terre et conçu pour manoeuvrer l'ensemble de membranes à osmose inverse (38) sous la surface de l'étendue d'eau salée ; ou comprenant un conduit d'aspiration de pompe possédant une partie tubulaire en U conçue pour être soulevée à l'aide de flotteurs et être abaissée à l'aide de poids, ladite partie tubulaire en U étant ouverte à la pression atmosphérique ; ou comprenant un réservoir d'équilibrage ouverte à pression atmosphérique et disposé entre l'ensemble de membranes à osmose inverse (38) et la pompe.

9. Procédé de production d'eau douce à partir d'eau salée en utilisant le système selon la revendication 1, comprenant :
la production d'eau douce à partir d'une étendue d'eau salée dans un emplacement sous la surface de l'étendue d'eau salée par osmose inverse ;
le pompage de l'eau douce jusqu'à un réservoir de stockage sous-marin (3) ; et
le stockage de l'eau douce dans le réservoir de stockage (3), ledit ensemble de membranes (38) produisant de l'eau douce, et ledit procédé comprenant en outre le déplacement de manière sélective de l'ensemble de membranes (38) le long du chemin (4) disposé sur un fond de l'étendue d'eau salée, à l'aide du câble (42) relié à la station de poulie à câble (44) et accumulant l'eau douce produite dans l'accumulateur (7).

10. Procédé selon la revendication 9, comprenant le pompage de l'eau douce dans le réservoir de stockage (3) jusqu'à une station de pompage (12) flottante à la surface de l'étendue d'eau salée ; ou ladite eau douce stockée dans le réservoir (3) étant stockée à un équilibre de pression avec l'étendue d'eau salée environnante, et ledit équilibre de pression entraînant le pompage de l'eau douce jusqu'à la station de pompage (12) ; ou ledit ensemble de membranes à osmose inverse (38) produisant de l'eau douce, et ledit procédé comprenant en outre la variation de manière périodique de l'emplacement de l'ensemble de membranes à osmose inverse(38) ; ou ladite eau douce étant produite en filtrant un écoulement d'eau salée traversant un dispositif de membrane (5) supporté par le fond d'une étendue d'eau salée.

11. Procédé selon la revendication 9, comprenant le stockage de l'eau douce dans des réservoirs de stockage supplémentaires (35) disposés dans l'étendue d'eau salée ; éventuellement chaque côté de chaque réservoir de stockage (35) étant exposé à des pressions de l'étendue d'eau salée ; ou un volume de l'eau douce stockée dans le réservoir de stockage (35) étant égal ou supérieur à un volume d'un conduit de sortie s'étendant jusqu'à une surface de l'étendue d'eau salée.
